Europäisches Patentamt

European Patent Office

Office européen des brevets

(19)

(11) Publication number: **0 203 657 B1**

## EUROPEAN PATENT SPECIFICATION

(12)

(45) Date of publication of patent specification: **08.05.91**

(21) Application number: **86200847.1**

(22) Date of filing: **09.03.82**

The file contains technical information submitted after the application was filed and not included in this specification

(51) Int. Cl.⁵: **H01M 10/36, H01M 10/04, H01M 8/24, H01M 8/02, H01M 4/00, C25B 9/00, C25B 11/02**

(60) Publication number of the earlier application in accordance with Art.76 EPC: **0 066 938**

---

(54) Electrochemical cells construction comprising electrodes and spacers.

---

(30) Priority: **01.06.81 US 268665**
**01.06.81 US 268666**
**01.06.81 US 268674**
**01.06.81 US 268675**

(43) Date of publication of application:
**03.12.86 Bulletin 86/49**

(45) Publication of the grant of the patent:
**08.05.91 Bulletin 91/19**

(84) Designated Contracting States:
**AT CH DE FR GB IT LI SE**

(56) References cited:
**FR-A- 1 504 315**
**FR-A- 2 085 028**
**FR-A- 2 146 602**
**FR-A- 2 300 424**
**GB-A- 1 160 587**

(73) Proprietor: **EXXON RESEARCH AND ENGINEERING COMPANY**
**P.O.Box 390, 180 Park Avenue**
**Florham Park, New Jersey 07932(US)**

(72) Inventor: **Bellows, Richard James**
**634 Carleton Road**
**Westfield New Jersey(US)**
Inventor: **Einstein, Harry**
**25 Midvale Drive**
**Springfield New Jersey(US)**
Inventor: **Grimes, Patrick Gerard**
**504 Mountain Avenue**
**Westfield New Jersey(US)**
Inventor: **Newby, Kenneth Russ**
**77 Sycamore Avenue**
**Berkeley Heights New Jersey(US)**
Inventor: **Tsien, Hsue Chu**
**11 Oak Hill Road**
**Chatham New Jersey(US)**

---

Kirk-Ohmer, Encyclopedia of Chemical Technology Vol. 18, pages 184-205 (1982) ( file pages 83-94 )

Modern Plastics Encyclopedia 1981-1982, pages 290-292, ( file pages 95,96 )

Ullmann's Encyclopädie Band 15 1978, Weinheim W. Germany, page 299

(74) Representative: **Somers, Harold Arnold et al ESSO Engineering (Europe) Ltd. Patents & Licences Mailpoint 72 Esso House Ermyn Way**
**Leatherhead, Surrey KT22 8XE(GB)**

**Description**

FIELD OF THE INVENTION

This invention relates to an electrochemical apparatus comprising at least one cell, and more particularly to an improved cell construction which can be useful in vehicular battery systems.

BACKGROUND OF THE INVENTION

In recent times, the use of light weight battery materials and cost efficient battery constructions have been of prime interest to the automotive and battery industries. In particular, cost-effective battery designs are of paramount importance for electric vehicular systems. For electric vehicles and other bulk energy storage applications, cost justification of a battery system is highly sensitive to the initial battery cost and to the life-cycle cost. The present invention seeks to provide a new electrochemical cell construction which reduces the initial costs and extends operating life for a battery system through the utilization of new manufacturing techniques, new weight-reducing materials and new integration of components.

A new cell design and electrochemical apparatus using it has resulted from the achievement of the above objectives, which design and construction features amongst other novelties:

1. An integral separator and spacer to reduce space, parts and cost.
2. A reduction in gas entrapment with the use of the new separator-spacer design.
3. An integral conductive/non-conductive (dielectric) coextruded plastic electrode which is both light weight and inexpensive to manufacture.
4. Reduction and/or elimination of parasitic shunt currents.
5. Male/female stacking and integration of parts and conduits to provide ease and compactness of assembly.
6. A two-piece interleaved bipolar battery assembly which is more compact, light weight, leakproof, easy to assemble and low cost.
7. A safer battery design and construction which reduces the possibility of spilling corrosive materials should compartments housing these materials rupture.

The subject invention is useful in the manufacture, construction and assembly of many different kinds of electrochemical apparatus, and the invention should be interpreted as not being limited to a specific system.

It is of particular interest for use in a circulating zinc-bromine battery, constructed in accordance with the teachings advanced in US-A-4105829 granted to : Agustin F. Venero, entitled: "Metal Halogen Batteries and Method of Operating Same", issued: August 8, 1978, and assigned to the present assignee.

The above-mentioned battery system is of particular interest because of its low cost and availability of reactants, its high cell voltage and its high degree of reversibility.

To the best of our knowledge and belief, the various novelties presented and described herein, are completely new within the art of electrochemical system design and construction. The skilled practitioner will gain a particular appreciation of the unique ideas and concepts advanced herein.

FR-A-2300424 discloses a fuel cell comprising a stack of electrodes alternating with separators. Each electrode comprises a non-conductive rectangular frame (e.g. of molded plastics material) surrounding a bipolar central electrode comprising a suitable catalyst. The frame is depicted as being thicker than the active central portion.

FR-A-2146602 describes and claims a soluble anode electrochemical generator of electric power. wherein a thin anodic compartment, more particularly a few tenths of a millimetre in thickness, is bounded by a layer of the material forming the anode and a microporous diaphragm facing such layer, and between such layer and the microporous diaphragm is disposed a spacer having on one face means which are applied to such layer and capable of being elastically deformed, the spacer bearing via its other face against the microporous diaphragm, thus enabling the spacing between such layer and diaphragm to be maintained substantially constant during discharge. In a preferred embodiment, the spacer is formed by a flexible plastic trellis comprising rows of substantially perpendicular rods, the intersection of such rows comprising resilient studs on the face opposite the anode, the heights of which increase by decompression as the anodic material is consumed.

FR-A-2138430 describes and claims a process for the production of a thin non-porous electrode for electrochemical generators, using a material based on at least one thermoplastic polymer rendered conductive by adding a carbonized material, at least one of the faces of such electrode being formed with uniformly disposed reliefs, the pitch between such reliefs being preferably of the same order of magnitude as their depth, the overall thickness of the electrode being a few tenths of a millimetre, wherein the material is calendered or extruded so as to obtain a thin sheet of substantially uniform thickness, whereafter the relief or patterning is impressed on the face of the sheet by heated rollers, at least one of which bears the imprint corresponding to the patterning relief.

DE-A-2627143 (equivalent to GB-A-1548597) discloses a porous separator for an electrochemical cell which has been stamped or pressed to have projections on each side.

CH-A-119,558 discloses a porous ebonite membrane supported in a surrounding non-porous ebonite frame which may be integral with the membrane. The frame may be thicker than the membrane and the membrane may be ribbed.

GB-A-1160587 discloses an electrochemical cell having an ion-permselective resin membrane having projections formed on each face. The projections may have the form of pebbles, ribs, etc., and projections on one face are opposite projections on the other face. The projections are of the same material as the membrane. The edge region of the membrane is flat so that a separable spacing frame can form a liquid-tight seal therewith. The frame has apertures for the passage of fluid into the space defined between the membrane and an adjacent electrode.

FR-A-1504315 discloses a fuel cell comprising an exchange membrane extending across the space surrounded by a frame which is thicker than the membrane. The membrane has holes therethrough to receive the two halves of a spacing member extending on both sides of the membrane when mutually engaged through the holes by a push-fit action.

FR-A-1547710 discloses an electrochemical cell, such as a fuel cell, having a membrane of selective permeability which is embossed, preferably by hot-pressing between dies, so as to have hollows and projections. The membrane has a low electrical resistivity.

US-A-4,218,521 discloses a zinc-halide battery construction comprising a microporous separator having spacing members on opposite faces to define catholyte and anolyte spaces. The spacing members may be similar in shape on both faces of the separator and may have the form of discrete projections. The spacing members are of electrically non-conductive material and may be integral with their supporting web.

US-A-4,124,478 discloses an electrode/frame combination comprising a relatively thin electrode of electrically-conductive impermeable plastics material enclosed in a rectangular frame of non-conductive plastics material. The electrode may have the same thickness as the frame and the combination may be made by vacuum molding or heat welding.

US-A-4,169,816 discloses a composition for an electrode sheet. The composition is extruded through a "coat-hanger" die and may be given a corrugated or similar profile, and for use as a bipolar electrode plate, it may be mounted in a frame.

FR-A-2085028 (equivalent to GB-A-1296316) discloses an electrochemical cell (e.g., a fuel cell) comprised of a stack of plate members which are secured relative to each other by snap-fastener elements.

FR-A-2138430 discloses a conductive polymeric electrode made by extrusion followed by embossing or calendaring to obtain a desired uniform pattern of raised and depressed areas. The electrode has a thicker "frame" at its outer periphery which is of the same material as the remainder of the electrode.

The present invention provides an electrochemical apparatus comprising at least one cell comprising a separator disposed between electrodes, each electrode having a central part of electrically-conductive plastics material and side parts of electrically non-conductive material, characterized in that the side parts are provided only on two opposite edges of the central part as a result of coextrusion in a side-by-side relationship with the central part, the side parts and the central part have substantially the same thickness, and the two edges of the central part extending between the side parts are undercut so that the lengths of the side parts exceed the length of the undercut central part between the two said edges.

Preferably, the separator is a unitary separator and spacer unit comprising a frame disposed about a non-perforated microporous web which is thinner than the frame in order to define or form either internal compartments or recesses forming at least part of such internal compartments between the unit and the adjacent electrodes so that circulating electrolyte can flow about said electrodes, said web being able to provide ionic communication between adjacent compartments of the cell, and wherein each face of the web has a plurality of discrete projections which may be pebble-shaped and/or rod-shaped and which are ionically either less conductive or substantially non-conductive for maintaining a spaced compartmental distance between said unit and adjacent electrodes, substantially all of said projections on one face of the web being directly opposite corresponding projections on the other face thereof, the web being preferably ion-selective.

The separator-spacer units and the sheet electrodes may be assembled by male and female connections. The said connections may be hollow and form fluid conduits for said cells. The connections may have

4

channels or orifices in their walls for the passage of electrolyte between the interiors of the connections and respective electrolyte spaces or compartments defined between each separator-spacer unit and each adjacent electrode.

Preferably, the separator-spacer has a microporous mid-portion and non-porous side-portions.

The apparatus may comprise at least one stack of cells each comprised of two electrodes separated by a unitary separator and spacer unit.

In one embodiment, the electrochemical apparatus comprises a first inner compartment for storing a bromine-rich phase, a second compartment substantially surrounding the first inner compartment for containing a first electrolyte for circulation through the cell(s), a third compartment surrounding both the second and first compartments for containing a second electrolyte for circulation through the cell(s), and an outer casing substantially surrounding the third, second and first compartments. The apparatus may comprise a zinc-bromine system.

The apparatus may comprise at least part of a battery, electrolyzer or fuel cell.

In one embodiment, the invention provides a construction as herein described comprising a zinc-bromine system.

The construction may comprise or constitute at least part of a battery, electrolyzer or fuel cell.

This invention relates, therefore, in general terms, to an electrochemical apparatus comprising at least one cell, and preferably a stack of cells, each cell being comprised of an integral separator and spacer disposed between adjacent electrodes, each of the latter being preferably comprised of a composite plastic sheet having a coextruded electrically conductive mid-portion and electrically non-conductive top and bottom side portions. The separator-spacer and the sheet electrodes are preferably assembled relative to each other by male and female connections, which preferably are hollow and form fluid conduits for the cells. The electrochemical apparatus may be comprised of more than one stack of cells.

Our co-pending European patent application No. 86200846.3 (patent publication No. EP-A-0203656) describes and claims an integral separator and spacer unit for use in an electrochemical cell having electrodes and through which cell, during operation, a circulating electrolyte flows in contact with the electrodes, the said unit being in the form of a sheet disposable between adjacent pairs of electrodes and comprising a frame disposed about a non-perforated microporous web which is thinner than the frame in order to define or form either internal compartments or recesses forming at least part of such internal compartments between the unit and the adjacent electrodes when assembled with the latter so that circulating electrolyte can flow about said electrodes, said web being able to provide ionic communication between adjacent compartments of the cell, characterized in that each face of the web has a plurality of discrete pebble-shaped and/or rod-shaped projections which are ionically either less conductive or substantially non-conductive for maintaining a spaced compartmental distance between said unit and adjacent electrodes, substantially all of said projections on one face of the web being directly opposite corresponding projections on the other face thereof, the web being preferably ion-selective. The electrochemical apparatus of the present invention comprises an integral separator and spacer unit as described in EP-A-0203656, but we make no claim herein to the integral separator and spacer unit per se.

The integral or unitary separator-spacer unit which is described in EP-A-0203656 preferably comprises a microporous sheet which provides ionic communication between adjacent compartments of each cell. A web surface on each side of the microporous sheet is preferably covered with projections for maintaining a spaced compartmental distance between said separator-spacer and said adjacent electrodes. The projections on one web surface are preferably directly opposite corresponding projections on the other web surface of the sheet in order to provide a greater structural integrity to the sheet in its capacity to maintain a spaced distance between electrodes. The projections can be pebble or rod-shaped or a combination of pebble and rod-shapes.

The separator-spacer unit has a non-porous border substantially surrounding the microporous sheet, which microporous sheet can be ion-selective.

Our co-pending European patent application No. 82301197.8 (patent publication No. EP-A-0066938) describes and claims an electrode for use in an electrochemical cell (for example a zinc-bromine cell) comprising a central part of electrically-conductive plastics material and side parts of electrically non-conductive plastics material which have been coextruded with the central part, characterized in that the side parts are provided only on two opposite edges of the central part as a result of coextrusion in a side-by-side relationship with the central part and the side parts have substantially the same thickness as the central part and are free of grooves and recesses. The electrochemical apparatus of the present invention comprises an electrode as described in EP-A-0066938, but we make no claim herein to the said electrode per se.

The electrodes described in EP-A-0066938 have relatively narrow non-conductive top and bottom side portion strips with respect to their relatively wider conductive mid-portions. The electrodes can be made monopolar or bipolar, but can be specifically bipolar in order to operate in a zinc-bromine system, for example. The non-conductive side strips can be made of polypropylene, polyethylene, or copolymers thereof, while the conductive mid-portion may comprise a carbon-containing polyolefin. More specifically, the conductive mid-portion comprises, by weight, 100 parts polyolefin, 25 parts carbon, 5 parts each pitch fiber and glass fiber and 1 part fumed silica powder. The extruded material can be hot formed and can be dimpled.

The electrochemical apparatus can be provided with a protective current in order to reduce or eliminate parasitic shunt currents in common electrolyte systems of this type.

The zinc-bromine electrochemical system of the invention may also feature a leak and impact resistant construction comprising:

a first inner compartment for storing a bromine-rich phase;

a second compartment substantially surrounding said first inner compartment and containing a first electrolyte for circulation through said cell;

a third compartment substantially surrounding both said second and first compartments and containing a second electrolyte for circulation through said cell; and

an outer casing substantially surrounding said first, second and third compartments.

The first electrolyte is generally the catholyte for the system, while the second electrolyte is generally the anolyte. The bromine-rich phase is preferably a non-aqueous phase which separates from the aqueous catholyte and contains bromine complexing agents.

The compartment and casing materials are generally preferably comprised of chemically inert, impact resistant plastics.

It is an object of the present invention to provide a cost efficient electrochemical apparatus;

It is another object of this invention to provide an electrochemical apparatus which is light weight and compact;

It is a further object of the invention to provide a new electrochemical system having a high voltage and cyclic-life.

These and other objects of this invention will be better understood and will become more apparent with reference to the following detailed description considered in conjunction with the accompanying drawings.

BRIEF DESCRIPTION OF THE DRAWINGS

Figure 1 is a schematic diagram of a typical circulating zinc-bromine system which can used in the electrochemical apparatus of the invention as shown by way of examples, in the following Figures 2 to 7.

Figure 2 is a partially cutaway prospective view of an embodiment of zinc-bromine system constructed in accordance with this invention;

Figure 3 is an exploded perspective view of the two-sheet stack construction of a portion of a stack of cells of the electrochemical apparatus of this invention;

Figure 4 is a front view of the coextruded sheet electrode of the inventive apparatus shown in Figure 3;

Figure 4a is a side view of the sheet electrode of Figure 4;

Figure 5 is a perspective view of the electrode being extruded;

Figures 5a, 5b and 5c are respective top, front and side views of the coextrusion die used to fabricate the sheet electrode shown in Figures 3, 4, and 4a;

Figure 6 is a front view of the integral separator-spacer illustrated in the inventive construction of Figure 3;

Figure 6a is a side view of the integral separator-spacer depicted in Figure 6;

Figures 7a through 7d are illustrative of various designs for the projections depicted on the web surfaces of the sepatator-spacer shown in Figures 6 and 6a; and

Figures 7aa through 7dd are side views of the projections depicted in respective Figures 7a through 7d.

DETAILED DESCRIPTION OF THE INVENTION

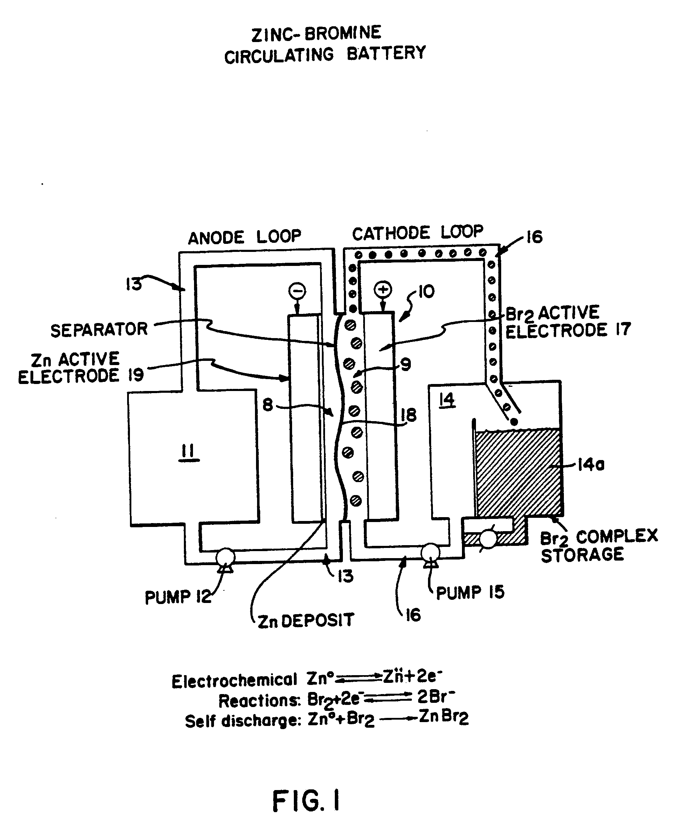

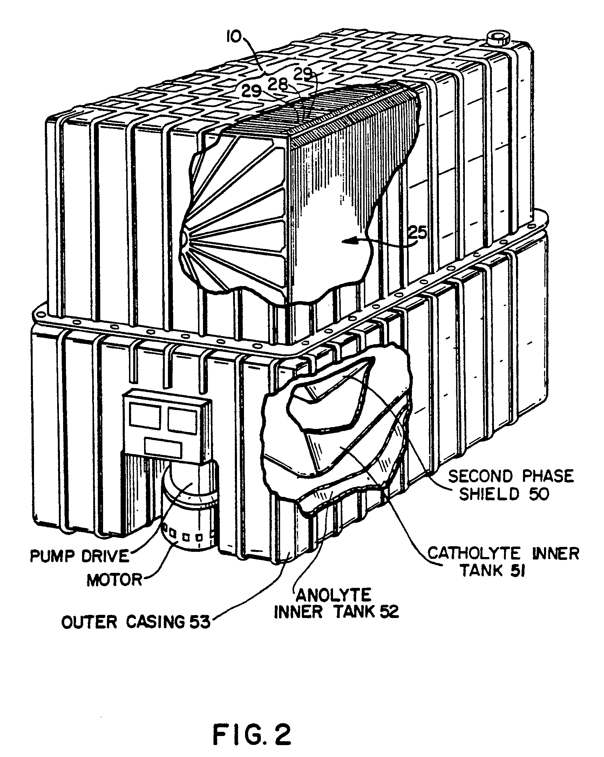

Referring to Figure 1, a schematic diagram of a typical circulating, bipolar zinc-bromine system is shown. This system can be used in the inventive apparatus which will be hereinafter described with reference to Figures 2 to 7. The zinc-bromine system of Figure 1 comprises two electrolytes which are circulated through separate compartments 8, 9 respectively, of the cell 10. An anolyte which is generally stored in reservoir 11 is pumped via pump 12 through compartment 8 and loop 13, generally referred to as the anode loop. A catholyte which is generally stored in reservoir 14, is pumped via pump 15 through compartment 9 and loop 16, generally referred to as the cathode loop.

The zinc-bromine system is also a two phase system, in that the catholyte has bromine complexing agents and is comprised of a first aqueous phase and a second, non-aqueous, bromine-rich phase. The bromine-rich (complexed) phase tends to separate at the bromine active electrode 17 from the aqueous catholyte. This non-aqueous phase is stored in the reservoir 14, as illustrated schematically by shaded portion 14a.

A separator 18 delinates and defines the boundary between the anolyte and cathode compartments 8 and 9, respectively. The separator 18 is a membrane which prevents or hinders movement of anions such as the bromide and tribromide ions from cathode compartment 9 to the anode compartment 8. In a bipolar design, the zinc active electrode 19 and the bromine active electrode 17 are opposite sides of the same electrode structure.

Further description of the zinc-bromine system can be obtained with reference to aforementioned US-A-4,105,829; issued August 8, 1978.

The zinc-bromine system can be made more practicable by integrating and improving various components of Figure 1, as will be hereinafter explained with respect to the inventive apparatus shown in Figures 2 to 7. Where applicable within the description, like components may have similar numerical designations for the sake of brevity.

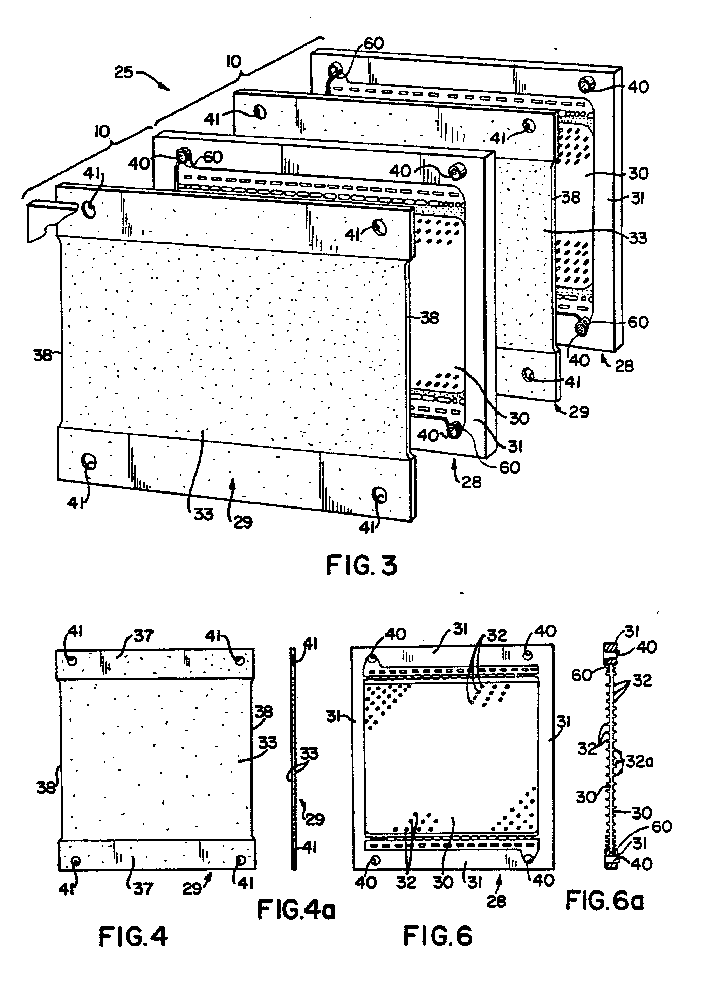

Now referring to Figure 2, an improved electrochemical apparatus is shown in a schematic perspective view. The improved apparatus utilises an integrated two-leaved separator-spacer and electrode forming a portion of a stack of cells, as depicted in the exploded view of Figure 3.

The electrochemical apparatus of Figure 2, comprises a battery stack 25 which in turn is comprised of a plurality of cells 10, each having two plates, as shown in Figure 3. One plate, according to the invention is an integral separator-spacer 28 as described in EP-A-0203656 an electrode sheet 29 as described in EP-A-0066938 spacer has two functions combined in a single sheet. The first purpose is that of the separator 18 in figure 1, i.e. to provide fluid communication between compartments as a membrane. A more detailed description of this function can be obtained from the above-mentioned US-A-4,105,829; issued August 8, 1978; and also from US-A-4,259,417; issued March 31, 1981 for an "Ionic Barrier", to inventors: R. J. Bellows and P. G. Grimes.

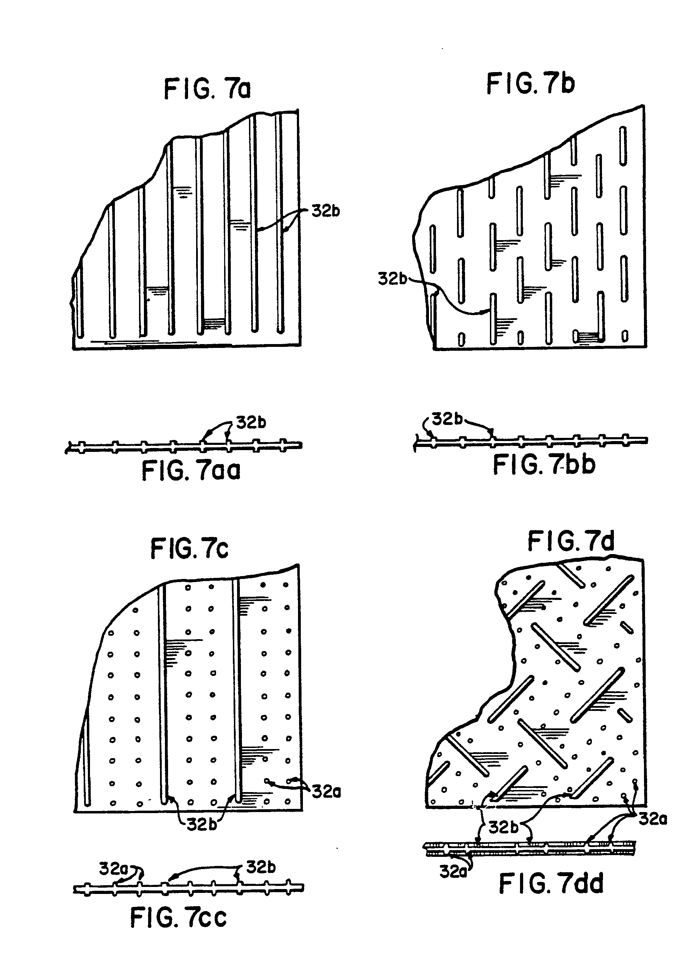

The second function of sheet 28 is to space the sheet 28 from the adjacent electrode sheets 29 so as to create respective anolyte and catholyte compartments 8 and 9 (Figure 1). The separator-spacer sheet 28 has a microporous mid-portion surface 30 which is recessed from the non-porous surface 31 of the sides, as shown in more detail in Figures 6 and 6a. When the separator-spacer sheets 28 are pressed between electrode sheets 29, the stack structure 25 is formed, as shown in Figure 2. The projections 32 on the microporous mid-portion surfaces are designed to maintain a spaced compartmental distance between the separator-spacer surface 30 and the flat conductive surfaces 33 of adjacent electrode sheet 29. The projections 32 provide structural means against collapse of surfaces 33 upon surfaces 30 and vice versa. The projections 32 on one side 30 of sheet 28 are diametrically opposite corresponding projections 32 on the opposite side 30 of sheet 28 as clearly illustrated in Figure 6a. This is done, to provide a greater strength against distortion of surfaces 33 upon surfaces 30. The projections 32 usually are designed as pebbles as depicted by arrows 32a in Figure 6a, and as also shown in Figures 7cc and 7dd, etc.

These projections 32 may also be designed with a rod-shape as depicted in Figures 7a, 7aa and 7b, 7bb; by arrows 32b. The projections 32 may also be a combination of pebble and rod-shaped protuberances as depicted in Figures 7c, 7cc and 7d, 7dd.

The design of these projections allow for an expeditious flow of electrolyte through the compartments 8 and 9, respectively. The flow of electrolyte is accomplished without entrapping gas bubbles about projections 32 within the compartmental cavities 8 and 9.

The mid-portion of the separator-spacer sheet 28 can be comprised of a microporous membrane material known as Daramic[R], Series HW-0835, which is made by W. R. Grace Co., Polyfibron Division, Cambridge, Massachusetts. The raised side borders 31 of non-porous material may be any moldable plastic. The plastic of borders 31 is typically overmolded around the separator-spacer insert by injection molding, as can be seen from Figure 6a.

\*No claim is made in the present patent application to the integral separator-spacer described in EP-A-0203656.

\*\*No claim is made in the present patent application to the electrode described in EP-A-0066938.

Sheets 28 and 29 are assembled by means of hollow male/female connectors 40 shown in detail in Figures 6 and 6a. When the sheets 28 and 29 are assembled in a stack 25, these hollow connectors 40 form electrolyte manifolds which supply compartments 8 and 9 with electrolyte via individual conduits or channels 60.

The male/female connectors 40 of sheets 28 fit through the holes 41 (Figures 4 and 4a) in adjacent sheets 29, and snap into mating connectors 40 in subsequently adjacent sheets 28.

The electrode sheet 29 of Figures 4 and 4a is comprised of a coextruded sheet of plastic which has an electrically conductive mid-portion 33 and two side portions 37 of electrically non-conductive (insulating) plastic. The top and bottom side portions 37 are coextruded "side-by-side" along with the mid-portion 33 to form a one piece continuous electrode sheet, which continuous sheet is then cut to specific lengths to form a plurality of smaller sheets 29. The edges 38 of sheet 29 are undercut (as shown) to improve electrical isolation in stack 25.

This "side-by-side" profile co-extrusion of insulating and conductive plastic sheets 37 and 33, respectively, presents a new and an alternative fast method of production for all monopolar and bipolar electrodes including electrodes for zinc bromine batteries. Compared with compression molding, the co-extrusion method gives more uniformity in thickness, a stronger bonding between the insulating and conductive plastics, much desired flatness, and "electrode by yards" similar to dress fabrics. The fabrication cost is much lower because the process is continuous.

A special formulation of carbon plastic is needed for mid-portion 33 of sheet 29 to provide good electrical conductivity, which still exhibit good extrudibility, good strength, and excellent anti-corrosive properties against bromine and zinc bromide in the electrolyte.

The preferred composition of the conductive carbon plastic is covered by aforementioned US-A-4,169,816; issued October 2, 1979, to H.C. Tsien. This formulation gives good conductivity (1 to 2 ohm-cm in resistivity), good flex strength, low permeability inertness to bromine, good extrudibility, better weldability and less mold shrinkage.

The conductive plastic is a mixture of 100 parts by weight of polyolefin copolymer, 25 parts by weight of special conductive carbon, 5 parts by weight each of carbon fiber and glass fiber, and 1 part by weight of fumed silica powder.

Some of the other advantages of coextruding the section 33 and 37 are:

1. Good bonding between the insulating and conductive plastics.
2. Maintaining width, flatness and thickness dimensions with the tolerances specified.
3. Clear and sharp boundary lines between sections 33 and 37.

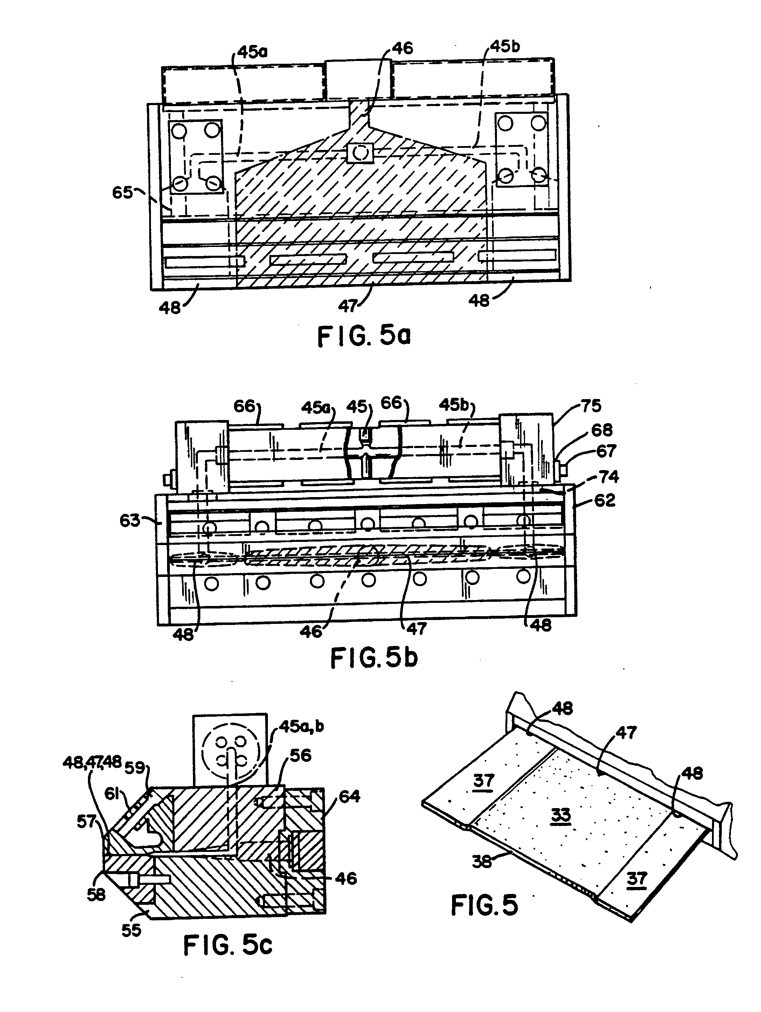

Figures 5a, 5b and 5c are respective top, front and side views of an extrusion die used to fabricate the electrode sheet. The center extrusion die 47 receives conductive plastic from a horizontal extruder through conduit 46, while the side extrusion dies 48, each receive non-conducting plastic from an overhead, vertical extruder via conduits 45a and 45b, respectively.

The horizontal extruder for the black conductive plastic is a 2-1/2" (6.35cm) screw with L/D of 30:1, while the vertical extruder for the opaque insulating plastic is a 1-1/2" (3.81 cm) dia. screw with L/D of 24:1.

The melted insulating plastic enters into the die at 90 degrees from the vertical stream 45, divides into two steams 45a and 45b and flows into one left and one right separate "coat hangers" along side the main coat hanger 45. The die design is conventional, except that the side-by-side profile division is believed to be novel. The die is of split construction in order to facilitate any changes in the design and the ease of fabrication.

The main die assembly consists of a lower die body 55, upper die body 56, flexible upper lip 57 and fixed lower lip 58.

The die lip gap is ground to allow for the swell of plastics emerging out of the die. Lip gaps can be individually adjusted by screws 59 in conjunction with the nut bars 61. The two side plastics 62 and 63 close the two outsides of flow channels of the insulating plastics and give a box-like reinforcement.

Adapter 64 provides connection to the main extruder. There are (16) cartridge heaters 65 and (4) band heaters 66 for heating the two streams of plastics. Temperatures are controlled through thermocouples and individual zone temperature controllers.

The individual adjustment of the left and right streams 45a and 45b is made possible by ball headed adjusting screws 67 and locknut 68. Bushings 74 make good connection from valve blocks 75 to die block 56. All main parts of the die are made of A2 air hardening tool steel. The Bethelehem A2 air hardening steel has the following physical properties:

8

| | As-annealed | Heat Treated |
|---|---|---|
| Hardness (R/C) | 15-20 | 56-58 |
| Yield Strength (psi) | (55,000) 379.2MPa | (208,750) 1439.3MPa |
| U.T.S. (psi) MPa | (114,950) 792.6 | (255,250) 1759.9 |
| Elongation % | 18% | .8% |

With the head pressures from the extruders well over 1000 psi (6.895 MPa), the die cannot operate free from internal leakage between the insulating and conducting streams if the die is in the soft annealed condition. The hardened and reground die eliminates internal leakage. Four different types of insulating plastics were tried, they are:

| | Melt Flow Index |
|---|---|
| Fiberfil J60/20E | 230°C, 2160 gm load, 4.5 gm in 10 min. |
| UGI LR711 HDPE | 190°C, 2160 gm load, 10.5 gm in 10 min. |
| Exxon P.P. 5052 P.P. | 230°C, 2160 gm load, .9 to 1.5 gm in 10 min. |
| Exxon P.P. 5011 P.P. | 230°C, 2160 gm load, .45 to .85 gm in 10 min. |

Both Exxon homopolymer PP5011 and 5052 can match well with the conductive plastic. They came out of the die with no wrinkles, the sheets were flat and uniform.

Theoretically, aside from previous considerations, any polyethylene or polypropylene for side portions 37 can be a good match with the conductive plastic mid-portion 33, because the basic material used in the conductive plastic is the copolymer of the two. The melting points are in the range of 325 to 375°F (162.8 to 190.6°C). Therefore, approximately 400°F (204.4°C) is a proper temperature in range for the two streams to meet. Head pressures are 1500 to 1800 psi (10.34 to 12.41 MPa). These conditions made a good bond at the bonding line.

Close match of melt indices is necessary in order to eliminate scallops formed at the joint of the two edges. The viscosities and velocities of the streams from the two extruders has to be very closely equal. Pressures can be manipulated from two heads while varying the temperatures in various die zones to get the matching conditions. However, the differences between melt flow index of conductive and that of insulating plastics has to be minimized.

The extrusion speed can be around 20 ft./minute (6.096 m/minute) to 90 ft./minute (27.432 m/minute).

There are many downstream attachments that can be added so that the co-extruded sheet can be worked on while still hot and soft. Thus, the repeated heating and cooling cycles with the accompanied plastic degradations can be eliminated. Powder of activated carbon can be sprayed on one face of the carbon plastic as the sheet is emerging from the die and before the sheet is pinched by the cold nip rolls. The powder spray is limited in the conductive area.

Various types of surface finishes can be obtained by changing the nip rolls from polished chrome-plated surface to Teflon coated and rubber rolls. It is also possible to replace nip rolls with dimpling rolls, so that cavities or special flow patterns can be formed on one or both faces of the co-extruded sheet. The hot forming rolls can make repeated patterns of design indentations in the electrode, if so desired.

The combination possibilities are only limited by imagination. For dimpling, the design is also repeated every revolution of the dimpling rolls. It is very much like printing repeated patterns on textile fabric. These downstream modifications such as catalyst spraying, dimpling, or hot forming can be added so that all operations can be done without significant added production cost.

Figure 5 is a schematic perspective view of the continuous electrode sheet emerging from the split die illustrated in Figures 5a, 5b and 5c.

Now referring to Figure 2, a further safety feature for the electrochemical system is illustrated. In order to prevent or reduce the risk of spilling corrosive bromine and bromine compounds in the event of casing or compartmental rupture, the various compartments can be nested with the bromine-containing compartment 50 being the most internal compartment. The bromine compartment 50 is surrounded by the catholyte-containing compartment 51, which in turn is surrounded by the anolyte-containing compartment 52. Compartments 50, 51, and 52 are all enclosed by outer casing 53.

Shunt currents can be eliminated along formed manifolds (connectors 40) by means of applying a protective current along these electrolyte carrying conduits, in accordance with the teachings expressed in aforementioned US-A-4,197,169 issued April 8, 1980 to M. Zahn, P. G. Grimes and R. J. Bellows.

The two-leaved electrochemical cell construction of this invention reduces parts and is easier to fabricate and assemble than prior systems of this kind. Further modifications to the invention may occur to those skilled practitioners of this art. Such modifications have not been described for the sake of brevity.

Other preferred features of the invention, which features may be taken individually or in combination, are:-

(a) At least some of the said projections have non-ionically conductive caps thereon or thereto.

(b) The projections are diamond shaped.

(c) The projections are of a different material from that of the web.

(d) The projections are substantially non-porous.

(e) The leak and impact resistant construction contains a bromine-rich phase comprising at least one bromine complexing agent.

(f) Each compartment of said construction comprises a chemically inert plastic frame.

(g) The catholyte employable comprises a bromine complexing agent.

(h) The leak and impact resistant construction for an electrochemical system has a second phase comprising at least one organic solvent.

(i) Each compartment thereof comprises a chemically inert metallic frame.

(j) The catholyte employable partially comprises, a product-extraction complexing agent, or comprises a substantially non-aqueous phase for carrying reactants.

(k) The anolyte employable comprises substantially organic extractant for products, or comprises a substantially non-aqueous phase for carrying reactants.

(l) The extruded sheet electrode is a monopolar or bipolar electrode.

(m) Said sheet electrode has said non-conductive material as one or more olefin homo- and/or co-polymers, such as PE, PP, or EP copolymer.

(n) The conductive material is preferably a synthetic plastics material and, suitably, is inert to bromine and compounds thereof.

(o) The sheet electrode is hot-formed and, desirably, dimpled.

(p) In the stack arrangement the said projections are disposed on opposite sides of the separator-spacer.

(q) There is more than one stack of cells in the electrochemical construction.

(r) The stack(s) comprise a zinc-bromine system.

(s) The electrochemical construction further has means for supplying a protective current to the cell(s).

(t) The construction forms part of a battery or electrolyser or fuel cell.

## Claims

1. An electrochemical apparatus comprising at least one cell (10) having a separator disposed between electrodes, each comprising a central part (33) of electrically-conductive plastics material and side parts (37) of electrically non-conductive plastics material which have been coextruded with the central part (33), characterized in that the side parts (37) are provided only on two opposite edges of the central part (33) as a result of coextrusion in a side-by-side relationship with the central part (33), and the side parts (37) have substantially the same thickness as the central part (33), and the two edges (38) of the central part (33) extending between the side parts (37) are undercut so that the lengths of the side parts exceed the length of the undercut central part between the two said edges.

2. An apparatus as in claim 1 in which the said non-conductive material comprises one or more olefin homo- and/or copolymers.

3. An apparatus as in claim 1 or claim 2 in which the conductive material comprises a carbon plastics material.

4. An apparatus as in any one of claims 1 to 3 in which the central part and the side parts are each olefin polymer or copolymer.

5. An apparatus as in any one of claims 1 to 4 in which the side parts (37) have holes (41) therethrough to receive male elements of hollow connectors (40) of separators (28) which, in the assembled electrochemical cell, are disposed on each side of the electrode.

6. An apparatus as in any one of claims 1 to 5 in which the central part (33) is hot-formed, and optionally, dimpled.

7. An apparatus as in any one of claims 1 to 6 in which the central part (33) has been sprayed with activated carbon.

8. An apparatus as in any one of claims 1 to 7 in which the central part (33) has a composition comprising, in parts by weight (pbw), 25pbw carbon; 5pbw pitch fiber; 5pbw glass fiber and 1 pbw silica powder.

9. An apparatus as in any one of claims 1 to 8 in which the said side parts (37) are flat and free of grooves and recesses.

10. An apparatus as in any one of claims 1 to 9 comprising at least one stack of cells each comprised of two electrodes separated by a unitary separator and spacer unit.

11. An apparatus as in any one of claims 1 to 10 comprising a first inner compartment (50) for storing a liquid (e.g., bromine-rich) phase, a second compartment (51) substantially surrounding the first inner compartment for containing a first electrolyte for circulation through the cell(s), a third compartment (52) surrounding both the second and first compartments for containing a second electrolyte for circulation through the cell(s), and an outer casing (53) substantially surrounding the third, second and first compartments.

12. An apparatus as in any one of claims 1 to 11 comprising at least part of a battery (e.g., of the zinc-bromine type), or an electrolyzer or a fuel cell.

## Revendications

1. Dispositif électrochimique comportant au moins une cellule (10) comprenant un séparateur disposé entre des électrodes, dont chacune comporte une partie centrale (33) réalisée en une matière plastique électriquement conductrice et des parties latérales (37) réalisées en une matière plastique non électriquement conductrice et qui ont été coextrudées avec la partie centrale (33), caractérisé en ce que les parties latérales (37) sont prévues uniquement sur deux bords opposés de la partie centrale (33) en tant que résultat de la coextrusion et sont disposées côte-à-côte par rapport à la partie centrale (33), et les parties latérales (37) possèdent sensiblement la même épaisseur que la partie centrale (33), et les deux bords (38) de la partie centrale (33), qui s'étendent entre les parties latérales (37), sont découpés de manière à être en retrait de sorte que les longueurs des parties latérales sont supérieures à la longueur de la partie centrale découpée en retrait entre lesdits deux bords.

2. Dispositif selon la revendication 1, dans lequel ledit matériau non conducteur comprend un ou plusieurs homopolymères et/ou copolymères d'oléfines.

3. Dispositif selon la revendication 1 ou 2, dans lequel le matériau conducteur comprend une matière plastique à base de carbone.

4. Dispositif selon l'une quelconque des revendications 1 à 3, dans lequel la partie centrale et les parties latérales sont constituées chacune par un polymère ou un copolymère d'oléfines.

5. Dispositif selon l'une quelconque des revendications 1 à 4, dans lequel les parties latérales (37) possèdent des trous traversants (41) destinés à recevoir des éléments mâles de connecteurs creux (40) de séparateurs (28), qui, dans la cellule électrochimique assemblée, sont disposés de chaque côté de l'électrode.

6. Dispositif selon l'une quelconque des revendications 1 à 5, dans lequel la partie centrale (33) est formée à chaud et, facultativement, est bosselée.

7. Dispositif selon l'une quelconque des revendications 1 à 6, dans lequel du charbon activé a été pulvérisé sur la partie centrale (33).

8. Dispositif selon l'une quelconque des revendications 1 à 7, dans lequel la partie centrale (33) possède une composition comportant, en parties en poids (pp) , 25 pp de carbone, 5 pp de fibres de poix, 5 pp de fibres de verre et 1 pp de poudre de silice.

9. Dispositif selon l'une quelconque des revendications 1 à 8, dans lequel lesdites parties latérales (37) sont plates et exemptes de gorges et de renfoncements.

10. Dispositif selon l'une quelconque des revendications 1 à 9, comprenant au moins un empilement de cellules constituées chacune de deux électrodes séparées par un séparateur unitaire et une unité formant entretoise.

11. Dispositif selon l'une quelconque des revendications 1 à 10, comprenant un premier compartiment intérieur (50) servant à emmagasiner une phase liquide (par exemple riche en brome), un second compartiment (51) entourant sansiment le premier compartiment intérieur de manière à contenir un premier électrolyte destiné à circuler à travers la (les) cellule(s), un troisième compartiment (52) entourant à la fois les second et premier compartiments et servant à contenir un second électrolyte destiné à circuler à travers la (les) cellule(s), et un carter extérieur (53) entourant sensiblement les troisième, second et premier compartiments.

12. Dispositif selon l'une quelconque des revendications 1 à 11, comprenant au moins une partie d'une batterie (par exemple du type au zinc-brome) ou un dispositif d'électrolyse ou une pile à combustible.

## Ansprüche

1. Elektrochemische Vorrichtung umfassend wenigstens eine Zelle (10) mit einem Separator, der zwischen Elektroden angeordnet ist, von denen jede einen Mittelteil (33) aus elektrisch leitendem Kunststoffmaterial und Seitenteile (37) aus eletrisch nicht leitendem Kunststoffmaterial, die mit dem Mittelteil (33) coextrudiert wurden, umfaßt, dadurch gekennzeichnet, daß die Seitenteile (37) nur an zwei gegenüberliegenden Kanten des Mittelteiles (33) aufgrund der Coextrusion in einer Seite-an-Seite-Beziehung mit dem Mittelteil (33) bereitgestellt werden und die Seitenteile (37) im wesentlichen die gleiche Dicke haban wie der Mittelteil (33) und die zwei Kanten (38) des Mittelteiles (33), die sich zwischen den Seitenteilen (37) erstrecken, hinterschnitten sind, so daß die Längen der Seitenteile die Länge des hinterschnittenen Mittelteiles zwischen den beiden Kanten überragt.

2. Vorrichtung nach Anspruch 1, in der das nichtleitends Material ein oder mehrere Olefin-Homo- und/oder -Copolymere umfaßt.

3. Vorrichtung nach Anspruch 1 oder Anspruch 2, in der das leitende Material ein Kohle-Kunststoffmaterial ist.

4. Vorrichtung nach einem dar Ansprüche 1 bis 3, in der der Mittelteil und die Seitenteile Olefinpolymer oder -copolymer sind.

5. Vorrichtung nach irgendeinem der Ansprüche 1 bis 4, in der die Seitenteile (37) Löcher (41) haben, um die eingreifenden Elemente von hohlen Verbindungsstücken (40) von Separatoren (28) aufzunehmen, die in der zusammengesetzten elektrochemischen Zelle an jeder Seite der Elektrode angebracht sind.

6. Vorrichtung nach irgendeinem der Ansprüche 1 bis 5, in der der Mittelteil (33) warmgeformt und gegebenenfalls mit Vertiefungen versehen ist.

7. Vorrichtung nach irgendeinem der Ansprüche 1 bis 6, in der der Mittelteil (33) mit Aktivkohle gespritzt wurde.

8. Vorrichtung nach irgendeinem der Ansprüche 1 bis 7, in der der Mittelteil (33) eine Zusammensetzung hat, die 25 Gewichtsteile Kohle, 5 Gewichtsteile Pechfasar, 5 Gewichtsteile Glasfaser und 1 Gewichtsteil Siliciumdioxidpulver umfaßt.

9. Vorrichtung nach irgendeinem der Ansprüche 1 bis 8, in der die Seitenteile (37) flach und frei von Rillen und Ausnehmungen sind.

10. Vorrichtung nach irgendeinem der Ansprüche 1 bis 9, umfassend wenigstens einen Stapel von Zellen. deren jede zwei Elektroden umfaßt, die durch eine integrale Separator- und Abstandshaltereinheit getrennt sind.

11. Vorrichtung nach irgendeinem der Ansprüche 1 bis 10, mit einer ersten inneren Kammer (50) für das Lagern einer flüssigen (z.B. bromreichen) Phase, einer zweiten Kammer (51), die im wesentlichen die erste innere Kammer umgibt, zum Aufnehmen eines ersten Elektrolyten für das Zirkulieren durch die Zelle(n), einer dritten Kammer (52), die die erste und zweite Kammer umgibt, zum Aufnehmen eines zweiten Elektrolyten für das Zirkulieren durch die Zelle(n) und einer äußeren Hülle (53), die im wesentlichen die dritte, zweite und erste Kammer umgibt.

12. Vorrichtung nach irgendeinem der Ansprüche 1 bis 11, wenigstens einen Teil einer Batterie (z.B. vom Zink-Brom-Typ) oder eine Elektrolysevorrichtung oder eine Brennstoffzelle umfassend.

ZINC-BROMINE
CIRCULATING BATTERY

Electrochemical $Zn^\circ \rightleftharpoons Zn^{..} + 2e^-$
Reactions: $Br_2 + 2e^- \rightleftharpoons 2Br^-$
Self discharge: $Zn^\circ + Br_2 \longrightarrow ZnBr_2$

# FIG. I

14

**FIG. 2**

FIG. 3

FIG.4

FIG.4a

FIG.6

FIG.6a

FIG. 5a

FIG. 5b

FIG. 5c

FIG. 5

EP 0 203 657 B1

FIG. 7a

FIG. 7b

32b

32b

32b

32b

FIG. 7aa

FIG. 7-bb

FIG. 7c

FIG. 7d

32a

32b

32b

32a

32a

32b

32a

FIG. 7cc

FIG. 7dd

18